# FASCICULE DE BREVET EUROPEEN

(11) **EP 3 575 729 B1**
(45) Date de publication et mention de la délivrance du brevet: **29.11.2023**
(21) Numéro de dépôt: 19177575.8
(22) Date de dépôt: 31.05.2019
(51) Int. Cl.: F28F 1/42, A61F 2/68

(54) **RÉFRIGÉRANT À AIR**
LUFTKÜHLER
AIR COOLER

(30) Priorité: 31.05.2018 FR 1870631
(43) Date de publication de la demande: 04.12.2019
(73) Titulaire: Université de Rennes, 35042 Rennes (FR); Centre National de la Recherche Scientifique, 75016 Paris (FR)
(72) Inventeur: PAIN, Thierry, 35630 Vignoc (FR); LE GAL, Yann, 35230 Bourgbarre (FR)
(74) Mandataire: Lavoix

(56) Documents cités:
- EP-A1- 2 226 602
- WO-A1-2017/007350
- CA-C- 2 693 509
- GB-A- 811 722
- US-A- 4 333 523
- US-A1- 2013 325 361

## Description

### DOMAINE TECHNIQUE

La présente invention concerne un dispositif de refroidissement à air, en particulier un réfrigérant de laboratoire à air convenant notamment à une utilisation dans un montage expérimental en laboratoire de chimie.

### ART ANTERIEUR

Les réfrigérants ou tubes réfrigérants sont des objets fréquemment utilisés dans les montages expérimentaux notamment en chimie organique. Ils se composent d'un tube, typiquement en verre, normalement destiné à être placé au dessus d'un ballon dans un montage expérimental. Lorsque le produit mis à chauffer dans le ballon se transforme en vapeurs, ces dernières remontent dans le réfrigérant placé au-dessus. Le rôle du réfrigérant est alors de refroidir les vapeurs de produit pour que ces dernières se condensent et retombent dans le ballon. Ainsi, la perte de produit est limitée.

Les réfrigérants les plus communément utilisés sont des réfrigérants à eau qui mettent en oeuvre un liquide favorisant le refroidissement des vapeurs, habituellement de l'eau, et sont classés en trois catégories : droits, à boules ou à serpentin, selon la forme du conduit interne du dispositif, par lequel va circuler la vapeur à condenser ou l'eau destinée à refroidir ladite vapeur.

La circulation du liquide dans les réfrigérants à eau s'opère soit dans un conduit confiné à l'intérieur du réfrigérant, comme c'est le cas par exemple des réfrigérants à serpentin, soit en périphérie du réfrigérant comme par exemple les réfrigérants droits ou à boules. Il existe des réfrigérants combinant plusieurs de ces formes, tels que ceux illustrés par exemple dans US4333523A. Cette circulation de liquide permet de maintenir une paroi, destinée à être en contact avec les vapeurs, à une température inférieure à celle des vapeurs. Lorsque les vapeurs rencontrent cette paroi plus froide, elles se liquéfient et s'écoulent, généralement dans le ballon connecté en dessous du réfrigérant. Plus la paroi est froide, plus la quantité de vapeur qui se liquéfie au lieu de s'échapper du système est importante. Ainsi, les réfrigérants à eau sont particulièrement efficaces car la circulation d'un liquide permet de refroidir continuellement la paroi en contact avec les vapeurs chaudes. Cependant, ces réfrigérants sont à l'origine d'une consommation d'eau importante. Notamment, lorsque le raccordement au réseau d'alimentation en eau devient défectueux alors qu'il n'est pas surveillé, des fuites voire des inondations peuvent se produire. Un autre inconvénient est que le réservoir périphérique n'est pas accessible pour le nettoyage et qu'il est fréquent que des algues s'y développent à mesure des utilisations.

Il existe des réfrigérants à air, qui se composent d'un tube droit unique dans lequel circulent les vapeurs. Là aussi, celles-ci vont se liquéfier au contact de la paroi du tube dont la température est inférieure à celle des vapeurs. C'est alors l'air ambiant qui maintient la température de la paroi du tube en dessous de celle de la vapeur. La température de l'air ambiant, généralement comprise entre 15 et 25°C, étant supérieure à celle de l'eau circulante provenant d'un réseau d'alimentation en eau froide (environ 10°C), ces tubes droits connus de l'état de l'art sont moins efficaces que les réfrigérants à eau décrits ci-dessus, c'est-à-dire qu'ils liquéfient des quantités moins importantes de vapeurs, qui vont alors s'échapper du réfrigérant.

Des réfrigérants à air ont été développés qui présentent des élargissements latéraux destinés à augmenter la surface d'échanges thermiques avec l'air ambiant. Cependant, ces réfrigérants ne permettent pas d'obtenir des résultats comparables à ceux obtenus grâce aux réfrigérants à eau. US 2013/325361 A1 décrit un réfrigérant à air selon le préambule de la revendication 1.

Ainsi, il existe un besoin pour un réfrigérant à air plus efficace, utilisable dans un montage expérimental classique de chimie organique.

### RESUME DE L'INVENTION

Les inventeurs ont mis au point un réfrigérant à air qui permet d'obtenir une condensation plus efficace des vapeurs que les réfrigérants de l'art antérieur et qui s'affranchit d'un refroidissement par l'eau. Plus particulièrement, le réfrigérant à air 1 selon l'invention est muni d'ailettes 2 qui s'étendent vers l'intérieur du réfrigérant, au-delà d'un axe longitudinal central A-A' du réfrigérant.

Ainsi, un objet de l'invention concerne un réfrigérant à air selon la revendication 1.

Selon des modes de réalisation particuliers, le réfrigérant à air comprend les caractéristiques correspondant à l'une ou plusieurs des revendications 2 à 7, prise(s) isolément ou selon toutes les combinaisons techniquement possibles.

Un deuxième objet selon l'invention concerne un dispositif selon la revendication 8.

Un troisième objet selon l'invention concerne un procédé de fabrication selon la revendication 9.

Selon un mode de réalisation particulier, ledit procédé comprend les caractéristiques correspondant à la revendication 10.

L'invention a enfin pour objet une utilisation selon la revendication 11.

Selon des modes de réalisation particuliers, l'utilisation comprend les caractéristiques correspondant à l'une ou plusieurs des revendications 12 et 13, prise(s) isolément ou selon toutes les combinaisons techniquement possibles.

### BREVE DESCRIPTION DES FIGURES

L'invention sera mieux comprise à la lumière de la description détaillée et des figures suivantes qui ne sont qu'illustratives et ne sauraient en rien limiter l'invention.
[Fig.1] Schéma d'un montage expérimental comprenant un réfrigérant 1 selon un mode de réalisation de l'invention.
[Fig.2] Vue schématique en coupe d'un réfrigérant 1 selon un mode de réalisation de l'invention montrant les ailettes 2.
[Fig.3] Vue schématique d'une coupe longitudinale d'un réfrigérant 1 selon un autre mode de réalisation de l'invention.
[Fig.4] Vue schématique en coupe transversale selon l'axe B-B' de la figure 3 d'un réfrigérant 1 selon un mode de réalisation de l'invention.

### DESCRIPTION DETAILLEE DE L'INVENTION

La présente invention concerne un réfrigérant à air 1, en particulier un réfrigérant à air de laboratoire, comprenant au moins deux ailettes 2 s'étendant à l'intérieur du réfrigérant au-delà de l'axe longitudinal central A-A' dudit réfrigérant.

### Définitions

Dans le contexte de l'invention, le terme « environ » est utilisé pour indiquer qu'une valeur comprend les variations inhérentes à la marge d'erreur liée à l'utilisation d'un appareil de mesure, la méthode employée pour déterminer la valeur ou la méthode utilisée pour la fabrication du réfrigérant. Ainsi, dans un mode de réalisation, le terme « environ », placé devant une valeur, correspond à plus ou moins 10% de cette valeur.

Dans le contexte de l'invention, les termes « réfrigérant à air » désignent un dispositif permettant de refroidir de la vapeur circulant à l'intérieur dudit dispositif, grâce à la différence de température existant entre l'air ambiant à l'extérieur du dispositif et ladite vapeur. Dans le contexte de l'invention, l'air ambiant s'entend comme tout gaz situé autour du dispositif, par exemple l'air, ou un gaz particulier tel qu'un gaz inerte lorsque le dispositif est utilisé dans une hotte de type boîte à gants par exemple. Plus particulièrement, un réfrigérant à air diffère d'un réfrigérant à eau en ce qu'il n'est pas prévu au moins un circuit particulier supplémentaire, en périphérie ou à l'intérieur du réfrigérant, dans lequel va circuler de l'eau ou un autre liquide.

Dans le contexte de l'invention, il est fait référence à un « tube » pour désigner la forme générale du réfrigérant à air, avant ou après la formation des ailettes.

Selon un mode de réalisation particulier, le terme « tube » sert à désigner une forme qui est essentiellement celle d'un cylindre de révolution. Le terme « tube » désigne alors la forme essentiellement cylindrique du tube utilisé pour la fabrication du réfrigérant selon l'invention avant transformation, ou la forme générale d'un réfrigérant fabriqué selon l'invention, en ne tenant pas compte des creux ou bosses formés par les ailettes, rodages, ergots, bourrelets, et/ou les autres éléments ajoutés par soudage ou déformation au cours de la conception dudit réfrigérant.

Dans le contexte de l'invention, l'axe longitudinal central du réfrigérant à air est par exemple un axe de révolution du « tube ». L'axe de révolution d'un cylindre de révolution se définit comme la droite passant par les centres des bases du cylindre de révolution, qui est perpendiculaire aux bases.

Dans le contexte de l'invention, les termes « extrémité inférieure » d'un réfrigérant à air selon l'invention désignent la partie terminale du réfrigérant qui, lorsque celui-ci est positionné dans un montage expérimental classique, se situe vers le bas. Les termes « extrémité supérieure » d'un réfrigérant à air selon l'invention désignent la partie terminale du réfrigérant qui, lorsque celui-ci est positionné dans un montage expérimental classique, se situe vers le haut.

Dans le contexte de l'invention, le terme « ailette » désigne une extension vers l'intérieur du tube destinée à augmenter la surface d'échange thermique entre les milieux intérieur et extérieur dudit tube.

### Description des exemples

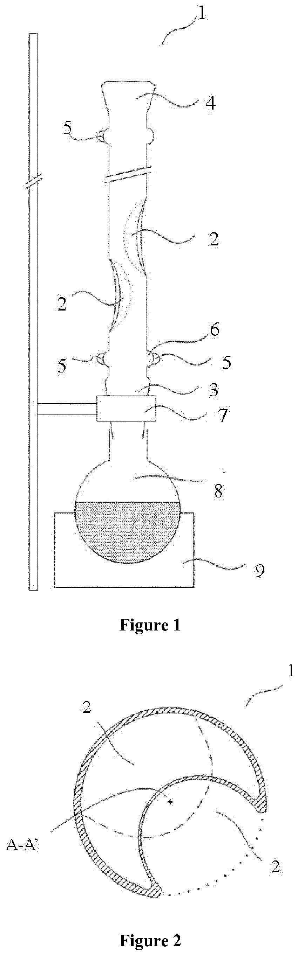

En référence aux figures 1 et 2, on décrit un réfrigérant à air 1 selon l'invention, ayant une forme essentiellement cylindrique ou en tube et présentant au moins deux ailettes 2 qui s'étendent vers l'intérieur du tube au-delà de l'axe longitudinal central A-A' dudit réfrigérant 1.

Selon une variante non représentée, le réfrigérant à air 1 possède une forme générale tubulaire non cylindrique.

L'axe longitudinal central A-A' est dans l'exemple représenté un axe de révolution de la forme générale tubulaire.

Selon une variante non représentée, la forme générale du réfrigérant à air 1 n'est pas de révolution autour de l'axe longitudinal central A-A'. Par exemple, la forme générale est à section carrée, elliptique, ou oblongue perpendiculairement à l'axe longitudinal central A-A'.

Le réfrigérant à air 1 est destiné à être utilisé dans un montage expérimental, comprenant notamment un ballon et un chauffe-ballon. La figure 1 illustre un exemple de montage expérimental comprenant un réfrigérant à air 1 selon un mode de réalisation de l'invention, un ballon 8, un chauffe-ballon 9 et un support muni d'une pince 7 qui soutient le réfrigérant à air 1 par son extrémité inférieure. Un produit, comme par exemple un solvant, est (aire grisée sur la figure 1) mis à chauffer dans le ballon 8 jusqu'à sa température d'ébullition. Le produit va alors s'évaporer et les vapeurs vont remonter à l'intérieur du réfrigérant à air 1. Elles vont alors entrer en contact avec au moins une ailette 2, sur laquelle elles vont condenser et se liquéfier. Les gouttelettes ainsi formées peuvent alors retomber dans le ballon 8.

Les ailettes 2 s'étendent à partir de de la forme générale tubulaire vers l'intérieur de la forme générale tubulaire. Vues depuis l'extérieur du réfrigérant à air 1, les ailettes 2 forment par exemple uniquement des creux dans la surface de la forme générale tubulaire.

Le réfrigérant à air 1 comprend deux ailettes 2 qui forment par exemple des invaginations essentiellement sphériques de la paroi vers l'intérieur du réfrigérant 1 et qui s'étendent au-delà de l'axe longitudinal central A-A' (schématisé en figures 2, 3 et 4) du réfrigérant à air 1. Il comprend également au moins un ergot 5 sur sa paroi extérieure, positionné sur au moins un bourrelet 6. La présence d'au moins un ergot et/ou au moins un bourrelet est optionnelle.

L'extrémité supérieure du réfrigérant à air 1 illustré dans le montage expérimental de la figure 1 a été usinée en rodage conique femelle 4, et l'extrémité inférieure en rodage conique mâle 3. La présence d'un rodage à au moins une extrémité d'un réfrigérant à air 1 selon l'invention permet de l'adapter à d'autres éléments d'un montage expérimental, par exemple un ballon 8, et est optionnelle en fonction des utilisations du réfrigérant à air 1.

Les ailettes 2 sont avantageusement disposées de manière à réduire le plus possible les espaces rectilignes à l'intérieur du réfrigérant à air 1, par lesquels les vapeurs pourraient traverser le réfrigérant à air d'un bout à l'autre sans rencontrer d'ailette. Autrement dit, les ailettes d'un réfrigérant à air selon l'invention sont disposées de manière à ce que, lorsque le réfrigérant est observé par le dessus, toutes ensembles elles couvrent environ au moins 60%, environ au moins 70%, environ au moins 80% ou environ au moins 90% de la surface de la section du tube. De façon plus préférée, les ailettes 2 sont disposées dans le réfrigérant selon l'invention de manière à ce qu'il n'y ait aucun espace rectiligne à l'intérieur du réfrigérant à air 1 par lequel les vapeurs pourraient traverser le réfrigérant à air d'une extrémité à l'autre sans rencontrer d'ailette.

Les ailettes 2 sont réparties à l'intérieur d'un réfrigérant à air 1 de manière à ne pas se superposer. Deux ailettes adjacentes peuvent avoir une partie des bords de leur paroi en contact l'une avec l'autre. De préférence, les parois de deux ailettes adjacentes n'entrent pas en contact les unes avec les autres. Selon un mode de réalisation, la plus petite distance qui sépare les parois de deux ailettes adjacentes est de environ au moins un, environ au moins deux, environ au moins trois, environ au moins quatre, environ au moins cinq, environ au moins six, environ au moins sept, environ au moins huit, ou environ au moins neuf millimètres. De préférence, la plus petite distance qui sépare les parois de deux ailettes adjacentes est d'environ un centimètre. Plus préférentiellement, la plus petite distance qui sépare les parois de deux ailettes adjacentes est d'environ un centimètre et demi, de préférence de deux centimètres.

Selon un mode de réalisation, la plus petite distance qui sépare les parois de deux ailettes adjacentes varie entre différentes paires d'ailettes adjacentes au sein d'un même réfrigérant à air.

Selon un autre mode de réalisation, les distances qui séparent deux ailettes 2 adjacentes sont essentiellement identiques. De façon préférée, les ailettes 2 sont disposées de façon hélicoïdale le long du réfrigérant à air 1, i. e. autour de l'axe longitudinal central A-A'. De préférence, le pas d'hélice comprend alors environ deux, environ trois, environ quatre, environ cinq, environ six, environ sept, environ huit, environ neuf, ou environ dix ailettes 2.

Le réfrigérant à air 1 peut avoir une taille adaptée pour une utilisation sur paillasse, c'est-à-dire de quelques dizaines de centimètres de longueur pour un diamètre de quelques centimètres. Selon les besoins, le réfrigérant à air selon l'invention peut présenter une taille bien supérieure pour permettre de condenser les vapeurs de grandes quantités de produit (plusieurs litres), notamment pour répondre à des besoins industriels. Dans ce cas, la longueur et/ou la hauteur du réfrigérant à air selon l'invention pourront être adaptées, indépendamment l'une de l'autre, selon un facteur de 2, 3, 4, 5, 6, 7, 8, 9, 10, 15, 20 ou plus. Par exemple, le réfrigérant à air selon l'invention peut présenter une longueur d'environ 200 cm et un diamètre d'environ 30 cm.

La figure 2 montre une vue du dessus d'une coupe transversale effectuée au niveau du milieu de la hauteur d'une ailette 2 du réfrigérant à air 1. Une autre ailette 2, située en dessous, est représentée par une ligne formée par des tirets. La paroi du réfrigérant à air à d'autres hauteurs est symbolisée par la ligne en pointillés. L'axe longitudinal central A-A' du réfrigérant à air est représenté au centre de celui-ci. Les espaces rectilignes à l'intérieur du réfrigérant par lesquels les vapeurs pourraient traverser le réfrigérant d'un bout à l'autre sans rencontrer d'ailette sont limités aux espaces qui, sur l'exemple de la figure 2, sont à la fois à l'intérieur du réfrigérant 1 et à l'extérieur des zones correspondant aux ailettes 2.

Selon un mode de réalisation, le réfrigérant à air 1 comprend au moins deux ailettes 2, de préférence placées avec un angle d'environ 180° entre deux ailettes successives.

Selon un mode de réalisation préféré, le réfrigérant à air 1 comprend au moins trois ailettes 2, disposées de manière essentiellement hélicoïdale en formant un angle d'environ 120° entre deux ailettes successives, c'est-à-dire avec un pas d'hélice comprenant environ trois ailettes.

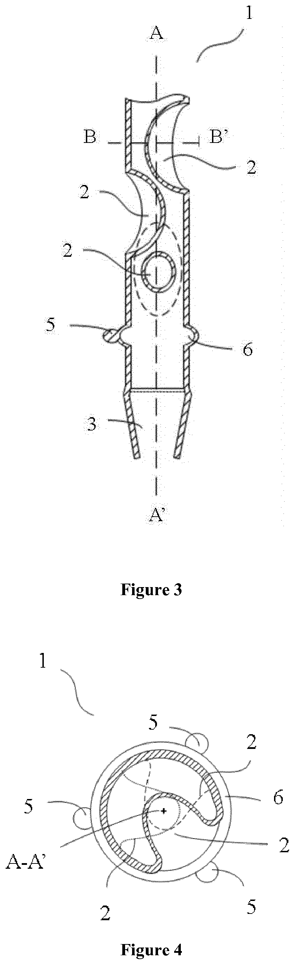

La figure 3 montre une coupe longitudinale de la partie inférieure d'un réfrigérant à air 1 selon un autre mode de réalisation de l'invention, sur laquelle sont représentées trois ailettes 2 positionnées de façon hélicoïdale avec un angle d'environ 120° entre deux ailettes successives. L'axe longitudinal central A-A' est représenté, ainsi qu'un bourrelet 6 et un ergot 5. Le réfrigérant à air selon la figure 3 s'achève en son extrémité inférieure par un rodage conique mâle 3.

La figure 4 est une vue en coupe transversale selon la section B-B' représentée sur la figure 3. Les ailettes 2 disposées de manière hélicoïdale avec trois ailettes par pas d'hélice couvrent une plus grande surface que les ailettes disposées en vis-à-vis comme illustré en figure 2, c'est-à-dire qu'elles laissent moins d'espaces rectilignes par lesquels les vapeurs pourraient s'échapper sans entrer en contact avec une ailette. Trois ergots 5 sont représentés, positionnés sur un bourrelet 6.

De façon optionnelle, le réfrigérant à air 1 selon l'invention comprend un rodage à au moins l'une de ses extrémités. De préférence, le réfrigérant à air 1 comprend un rodage conique mâle 3 à l'extrémité inférieure destinée à être placée vers le bas dans le montage expérimental, par exemple pour inter-opérer avec un ballon, et/ou un rodage conique femelle 4 à son extrémité supérieure. En alternative, le rodage conique mâle se situe à l'extrémité supérieure et le rodage conique femelle à l'extrémité inférieure d'un réfrigérant à air selon l'invention. Il est également possible que le réfrigérant à air selon l'invention porte un rodage mâle à chacune de ses extrémités, ou en alternative un rodage femelle à chacune de ses extrémités.

Un rodage conique dans le contexte de l'invention est également appelé liaison conique ou cône normalisé. Des cônes normalisés connus sont par exemple les CN 14/23, 19/26, 24/29, 29/32, 34/35, 40/38, 45/40, 50/42, 55/44, 60/46, 70/50, 85/55, 100/60, mâles ou femelles, notamment le cône mâle CNM 29/32 ou le cône femelle CNF 19/26, les nombres donnant l'indication de leurs dimensions d'ouverture.

Selon un mode de réalisation, le réfrigérant à air 1 selon l'invention comprend au moins un ergot 5 permettant sa stabilisation. Un ergot pour réfrigérant à air selon l'invention correspond à une protubérance située sur l'extérieur de la paroi du réfrigérant à air, qui permet d'éviter que le réfrigérant à air n'effectue plusieurs rotations selon son axe longitudinal central A-A' lorsqu'il est posé sur un support horizontal, comme une table ou une paillasse par exemple. Ainsi, un ergot selon l'invention peut prendre différentes formes, par exemple essentiellement sphérique ou essentiellement cubique. De façon optionnelle, les ergots 5 sont situés sur une partie élargie du tube qui forme un bourrelet 6. Selon un mode de réalisation, au moins un, au moins deux, au moins trois, au moins quatre ou au moins cinq ergots sont présents sur la paroi d'un réfrigérant à air 1.

Le réfrigérant à air 1 selon l'invention est en matériau thermoplastique comprenant du verre, matériau qui convient à une utilisation impliquant des flux de vapeurs, autrement dit qui offre une bonne résistance aux conditions de température et d'humidité générées par l'évaporation d'un produit.

De préférence, le matériau thermoplastique est le verre. Le type de verre convenant à un réfrigérant à air selon l'invention comprend tout type de verre utilisé classiquement pour fabriquer la verrerie de laboratoire. Par exemple, le verre peut être choisi parmi un verre blanc ordinaire, un verre sodocalcique, un verre borosilicaté constitué essentiellement de bore et de silice, ou un verre brun.

Selon un autre mode de réalisation, un réfrigérant à air selon l'invention est en matériau composite thermoplastique, comme par exemple les matériaux à fibre de verre et polymère thermoplastique décrits dans le brevet EP1734076B1.

Selon un mode de réalisation, les ailettes 2 sont constituées du même matériau que la paroi du réfrigérant à air 1, de préférence en verre. Selon un autre mode de réalisation, les ailettes 2 sont formées dans un matériau différent de celui de la paroi du réfrigérant à air 1.

On décrit également un dispositif selon l'invention, comprenant le réfrigérant à air 1, un ballon 8 et un chauffe-ballon 9. De préférence, le dispositif comprend en outre un support muni d'une pince 7.

Les ballons 8 et chauffe-ballons 9 sont choisis en fonction de l'expérimentation souhaitée et de leur compatibilité. Ces produits sont bien connus et décrits dans de nombreux catalogues de fournisseurs de produits de laboratoire. Selon cet objet, les dimensions du réfrigérant à air 1 pourront être modulées de façon à lui permettre d'inter-opérer avec le ballon 8, par exemple en adaptant le diamètre du réfrigérant à celui du col du ballon, par exemple en soudant un rodage conique à l'extrémité inférieure du réfrigérant.

On décrit aussi un procédé de fabrication du réfrigérant à air 1.

Selon un premier mode de réalisation, le réfrigérant à air 1 est formé à partir d'un tube en matériau thermoplastique, grâce aux étapes suivantes :
i) chauffer une zone à déformer du tube en matériau thermoplastique,
ii) déformer la zone chauffée en étape i) de manière à créer une des ailettes (2) orientée vers l'intérieur dudit tube et qui s'étend au-delà de l'axe longitudinal central A-A' dudit tube, et
iii) répéter les étapes i) et ii) jusqu'à obtenir le nombre d'ailettes (2) souhaité.

La zone chauffée est déformée par l'application d'une dépression à l'intérieur du tube en matériau thermoplastique, par exemple en aspirant avec la bouche à l'une des extrémités dudit tube. De préférence, les ailettes 2 sont réalisées par aspiration à la bouche à l'une des extrémités du tube et forment des demi-sphères encore appelées « boules aspirées ».

De façon préférée, les ailettes 2 sont disposées de façon hélicoïdale le long du tube, par exemple avec au moins deux, au moins trois ou au moins quatre ailettes par pas d'hélice.

Dans le contexte de l'invention, une ailette peut avoir une forme générale essentiellement plane (par exemple un sillon), essentiellement cylindrique, ou essentiellement sphérique, plus particulièrement essentiellement la forme d'une demi-sphère.

De préférence, le procédé de fabrication d'un réfrigérant selon l'invention comprend en outre le soudage d'un rodage conique à au moins une extrémité.

Le rodage peut être réalisé par n'importe quel moyen connu de l'homme de l'art. Par exemple, il peut être réalisé par une machine à commande numérique, ou par un souffleur de verre. La fabrication du rodage est habituellement réalisée en deux étapes, comprenant une première étape de façonnage à chaud, au cours de laquelle le rodage a un aspect translucide, et une seconde étape dite de rodage, au cours de laquelle le verre est usé à la main par l'utilisation successive d'abrasifs carborundum ou carbure de silice dont la taille du grain diminue successivement, ou automatiquement grâce à des outils diamantés. Les rodages conventionnels sont disponibles commercialement. Le rodage peut être soudé au tube avant ou après la formation des ailettes, de préférence avant.

De façon préférée, le procédé de fabrication d'un réfrigérant à air selon l'invention comprend en outre l'ajout d'au moins un ergot à l'extérieur du réfrigérant. L'étape supplémentaire d'ajout d'un ergot peut être réalisée par n'importe quel moyen connu de l'homme de l'art. Par exemple, un ergot peut être en verre et réalisé par la fusion d'une extrémité d'une baguette en verre de manière à déposer sur la paroi extérieure du réfrigérant à air une goutte de verre qui durcira en refroidissant.

Le réfrigérant à air 1 est par exemple utilisé pour refroidir une vapeur ou une mélange de vapeurs circulant à l'intérieur du réfrigérant à air par échange thermique avec un air ambiant à l'extérieur du réfrigérant à air. Comme déjà mentionné, l'air ambiant est par exemple de l'air ordinaire (atmosphérique), ou un gaz inerte, le réfrigérant à air 1 étant alors situé dans une hotte (non représentée).

L'air ambiant pénètre dans les logements formés par chacune des ailettes 2. Un échange thermique se produit entre la ou les vapeurs et l'air ambiant via le matériau thermoplastique. Les ailettes 2 ont avantageusement pour effet d'augmenter la surface de contact entre la ou les vapeurs et le matériau thermoplastique refroidi par l'air ambiant.

Le refroidissement se poursuit avantageusement jusqu'à la condensation d'une ou plusieurs desdites vapeurs.

### EXEMPLES

Procédé de fabrication d'un réfrigérant à air selon l'invention.

Les inventeurs ont réalisé un réfrigérant à air selon le procédé décrit ci-après. Un rodage de type cône mâle 29/32 a été soudé à un tube de verre de 28 mm de diamètre et dont la paroi a une épaisseur de 2 mm. Un bourrelet a été réalisé à 25 mm de distance du rodage mâle, en chauffant le tube de verre à la distance correspondante et en soufflant à l'intérieur du tube. Ensuite, un rodage de type cône femelle 19/26 a été soudé à la longueur finale souhaitée du réfrigérant à air, ici 500 mm. Un premier ergot arrondi a été soudé sur le bourrelet grâce à la baguette de verre, puis un deuxième ergot a été soudé sur le bourrelet à 120° du premier, et enfin un troisième ergot a été soudé sur le bourrelet à 120° des deux premiers. Dans cet exemple, les ergots ont servi de repères pour aligner les ailettes qui ont été réalisées par la suite. La première ailette a été réalisée à 25 mm du bourrelet en chauffant doucement, c'est-à-dire en flamme molle ou raide, le tube dans la zone correspondante et en aspirant à la bouche à l'une des extrémités du tube, de manière à obtenir une ailette en forme de boule aspirée qui s'étend vers l'intérieur du réfrigérant au-delà de l'axe longitudinal central A-A' du tube. Le diamètre à la base de l'ailette était d'environ 25 mm. La deuxième ailette en boule aspirée a été réalisée de la même manière, en prenant pour repère l'ergot suivant, et en se plaçant à 25 mm de la première ailette, en direction du rodage femelle. De cette façon, les sommets de la première et de la deuxième ailette étaient espacés d'une hauteur environ 25 mm. Les ailettes suivantes ont été réalisées en répétant ces étapes jusqu'à la longueur souhaitée.

### Performances d'un réfrigérant à air selon l'invention

Les inventeurs ont réalisé un réfrigérant à air selon la méthode décrite ci-dessus et ont comparé les performances dudit réfrigérant à air à celles d'autres réfrigérants disponible commercialement.

### Expérimentation n°1

Un volume de 150 mL de solvant a été placé dans un ballon de 150 mL et chauffé au reflux grâce à un bloc réactionnel DrySyn ^{®} pendant 6 ou 16 heures. La température de la pièce était constante et égale à 20°C. L'étanchéité entre le réfrigérant et le ballon a été réalisée par un joint en Téflon ^{®}.

Les mêmes conditions ont été appliquées en utilisant, au lieu du réfrigérant à air selon l'invention (« RABA ») (longueur utile 40 cm ; diamètre 2,5 cm), un réfrigérant à air Condensyn (longueur utile 40 cm ; diamètre 4,0 cm) et un réfrigérant à eau à serpentin (longueur utile 25 cm ; diamètre 4,0 cm).

**Tableau 1 : caractéristiques générales des solvants testés, conditions expérimentales et pourcentages (%) de perte totale observés.**

| | | | | | **% perte totale** | | |
|---|---|---|---|---|---|---|---|
| **Solvant** | **Densité** | **Teb** | **Texp** | **durée exp.** | **RABA** | **Condensyn** | **serpentin** |
| éther | 0,71 | 34,6 | 38 | 6h | 0,9 | 1,8 | 1,0 |
| | | | | 16h | 3,3 | 8,1 | 3,6 |
| dichlorométhane | 1,33 | 40 | 44 | 6h | 0,5 | 1,4 | 0,9 |
| | | | | 16h | 1,2 | 3,5 | 2,4 |
| acétonitrile | 0,8 | 82 | 90 | 6h | 0,3 | 0,9 | 0,6 |
| | | | | 16h | 0,7 | 2,1 | 1,4 |
| toluène | 0,87 | 110 | 121 | 6h | 0,2 | 0,2 | 0,2 |
| | | | | 16h | 0,4 | 0,5 | 0,4 |

Le tableau 1 présente, pour les quatre solvants testés, leur densité et leur température d'ébullition (Teb). Ce tableau rapporte également la température expérimentale (Texp) appliquée aux solvants et la durée de chauffage (durée exp.). Enfin, le tableau 1 présente les résultats obtenus en pourcentages de perte de produit totale. Il ressort des ces données que le réfrigérant à air selon l'invention a une efficacité au moins équivalente à celle d'un réfrigérant à serpentin, qui est un réfrigérant à eau. Par exemple, les résultats sont comparables pour l'éther et le toluène. Le réfrigérant à air selon l'invention est environ deux fois plus efficace que le réfrigérant à eau pour les solvants dichlorométhane et acétonitrile, quelle que soit la durée de l'expérimentation. Son efficacité est également bien supérieure à celle de l'autre réfrigérant à air du commerce pour l'éther, l'acétonitrile et le dichlorométhane, pour les deux durées d'expérimentation testées. Pour le toluène, son efficacité est comparable à celle de l'autre réfrigérant à air du commerce. Il est à noter que, hormis pour le toluène, le réfrigérant à air connu de l'art antérieur est systématiquement moins efficace que le réfrigérant à eau en serpentin.

### Expérimentation n°2

Une seconde expérimentation a consisté à introduire 150 mL de solvant chauffé à reflux dans un ballon de 150 mL pendant 8h. Le chauffage a été réalisé grâce à un bloc réactionnel DrySyn ^{®}. La température de chauffage était de 5 à 20°C au dessus de la température d'ébullition du solvant. L'étanchéité entre le réfrigérant et le ballon a été réalisée par un joint en Téflon ^{®}. La température ambiante mesurée dans la pièce était constante et de 20°C.

Les mêmes conditions ont été appliquées en utilisant, au lieu du réfrigérant à air selon l'invention, un réfrigérant à air Condensyn.

**Tableau 2 : caractéristiques générales des solvants testés, conditions expérimentales et % de perte par heure observés.**

| | | | | **% perte /heure** | |
|---|---|---|---|---|---|
| **Solvant** | **Teb** | **Texp** | **durée exp.** | **RABA** | **Condensyn** |
| dichlorométhane | 40 | 50 | 8h | 0,2 | 0,2 |
| acétone | 56 | 71 | 8h | 0,2 | 0,2 |
| THF | 66 | 81 | 8h | 0,1 | 0,3 |
| acétonitrile | 82 | 102 | 8h | 0,05 | 0,2 |
| eau | 100 | 120 | 8h | 0,1 | 0,4 |
| toluène | 110 | 130 | 8h | 0,02 | 0,2 |

Cette expérimentation confirme que le réfrigérant à air selon l'invention a une efficacité supérieure ou au moins équivalente à celle du réfrigérant à air connu.

## Revendications

1. Réfrigérant à air (1) de forme générale tubulaire définissant un axe longitudinal central (A-A'), le réfrigérant à air (1) étant constitué d'un matériau thermoplastique comprenant du verre, **caractérisé en ce que** le réfrigérant à air (1) comprend au moins deux ailettes (2) orientées vers l'intérieur du réfrigérant à air (1), les ailettes (2) s'étendant au-delà de l'axe longitudinal central (A-A').

2. Réfrigérant à air (1) selon la revendication 1, **caractérisé en ce qu'**il est constitué de verre.

3. Réfrigérant à air (1) selon la revendication 1 ou 2, dans lequel l'axe longitudinal central (A-A') est un axe de révolution de la forme générale tubulaire.

4. Réfrigérant à air (1) selon l'une quelconque des revendications précédentes, comprenant en outre au moins un ergot (5).

5. Réfrigérant à air (1) selon l'une quelconque des revendications précédentes, comprenant en outre un rodage à une extrémité supérieure (4) selon l'axe longitudinal central (A-A'), et/ou un rodage à une extrémité inférieure (3) selon l'axe de longitudinal central (A-A').

6. Réfrigérant à air (1) selon l'une quelconque des revendications 1 à 5, dans lequel les ailettes (2) sont disposées de manière hélicoïdale le long du réfrigérant à air (1).

7. Réfrigérant à air (1) selon l'une quelconque des revendications 1 à 6, dans lequel l'intérieur et la périphérie du réfrigérant à air (1) sont dépourvus de tout circuit supplémentaire destiné à la circulation d'un liquide de refroidissement.

8. Dispositif comprenant un réfrigérant à air (1) selon l'une quelconque des revendications précédentes, un ballon (8) et un chauffe-ballon (9).

9. Procédé de fabrication d'un réfrigérant à air (1) selon l'une quelconque des revendications 1 à 7, comprenant les étapes suivantes :
i) chauffer une zone à déformer d'un tube en matériau thermoplastique,
ii) déformer la zone chauffée de manière à créer une ailette (2) orientée vers l'intérieur dudit tube et qui s'étend au-delà de l'axe longitudinal central (A-A'), l'étape ii) étant réalisée en créant une dépression dans le tube, et
iii) répéter les étapes i) et ii) jusqu'à obtenir un nombre d'ailettes (2) souhaité.

10. Procédé selon la revendication 9, dans lequel l'étape ii) est réalisée en effectuant une aspiration par une extrémité dudit tube, de façon à créer l'ailette (2) en boule aspirée.

11. Utilisation d'un réfrigérant à air (1) selon l'une quelconque des revendications 1 à 7, ou d'un dispositif selon la revendication 8, dans laquelle au moins une vapeur circulant à l'intérieur du réfrigérant à air (1) est refroidie par échange thermique avec un air ambiant situé à l'extérieur du réfrigérant à air (1).

12. Utilisation selon la revendication 11, dans laquelle ladite vapeur refroidie se condense.

13. Utilisation selon la revendication 11 ou 12, dans laquelle l'air ambiant est :
- de l'air atmosphérique, ou
- un gaz inerte, le réfrigérant à air (1) étant alors situé dans une hotte.

## Patentansprüche

1. Luftkühler (1) mit allgemein röhrenförmiger Form, der eine mittlere Längsachse (A-A') definiert, wobei der Luftkühler (1) aus einem thermoplastischen Material besteht, das Glas umfasst, **dadurch gekennzeichnet, dass** der Luftkühler (1) mindestens zwei Rippen (2) umfasst, die zur Innenseite des Luftkühlers (1) gerichtet sind, wobei sich die Rippen (2) über die mittlere Längsachse (A-A') hinaus erstrecken.

2. Luftkühler (1) nach Anspruch 1, **dadurch gekennzeichnet, dass** er aus Glas besteht.

3. Luftkühler (1) nach Anspruch 1 oder 2, wobei die mittlere Längsachse (A-A') eine Drehachse der allgemein röhrenförmigen Form ist.

4. Luftkühlmittel (1) nach einem der vorherigen Ansprüche, ferner umfassend mindestens einen Stift (5).

5. Luftkühler (1) nach einem der vorherigen Ansprüche, ferner umfassend ein Läppen an einem oberen Ende (4) entlang der mittleren Längsachse (A-A') und/oder ein Läppen an einem unteren Ende (3) entlang der mittleren Längsachse (A-A').

6. Luftkühler (1) nach einem der Ansprüche 1 bis 5, wobei die Rippen (2) spiralförmig entlang des Luftkühlers (1) angeordnet sind.

7. Luftkühler (1) nach einem der Ansprüche 1 bis 6, wobei die Innenseite und der Umfang des Luftkühlers (1) frei von jeglichen zusätzlichen Kreisläufen sind, die für den Umlauf einer Kühlflüssigkeit bestimmt sind.

8. Vorrichtung, umfassend einen Luftkühler (1) nach einem der vorherigen Ansprüche, einen Ballon (8) und einen Ballonwärmer (9).

9. Verfahren zur Herstellung eines Luftkühlers (1) nach einem der Ansprüche 1 bis 7, umfassend die folgenden Schritte:
i) Erwärmen eines zu verformenden Bereichs eines Rohrs aus thermoplastischem Material,
ii) Verformen des erwärmten Bereichs, um eine Rippe (2) zu erzeugen, die in die Innenseite des Rohrs gerichtet ist und sich über die mittlere Längsachse (A-A') hinaus erstreckt, wobei Schritt ii) durch Erzeugen eines Unterdrucks in dem Rohr durchgeführt wird, und
iii) Wiederholen von Schritt i) und ii), bis eine gewünschte Anzahl von Rippen (2) erreicht ist.

10. Verfahren nach Anspruch 9, wobei Schritt ii) durchgeführt wird, indem ein Ende des Rohrs angesaugt wird, um den Rippen (2) aus einer angesaugten Kugel zu erzeugen.

11. Verwendung eines Luftkühlers (1) nach einem der Ansprüche 1 bis 7 oder einer Vorrichtung nach Anspruch 8, wobei mindestens ein innerhalb des Luftkühlers (1) zirkulierender Dampf durch Wärmeaustausch mit einer außerhalb des Luftkühlers (1) befindlichen Umgebungsluft gekühlt wird.

12. Verwendung nach Anspruch 11, wobei der abgekühlte Dampf kondensiert.

13. Verwendung nach Anspruch 11 oder 12, wobei die Umgebungsluft wie folgt ist:
- atmosphärische Luft oder
- ein Inertgas, wobei sich der Luftkühler (1) dann in einer Haube befindet.

## Claims

1. An air cooler (1) of generally tubular shape defining a central longitudinal axis (A-A'), the air cooler (1) being made of a thermoplastic material including glass, **characterised in that** the air cooler (1) comprises at least two fins (2) oriented towards the interior of the air cooler (1), the fins (2) extending beyond the central longitudinal axis (A-A').

2. An air cooler (1) as claimed in claim 1, **characterised in that** it consists of glass.

3. An air cooler (1) according to claim 1 or 2, in which the central longitudinal axis (A-A') is an axis of revolution of the general tubular shape.

4. An air cooler (1) according to any one of the preceding claims, further comprising at least one lug (5).

5. An air cooler (1) according to any of the preceding claims, further comprising a lapping at an upper end (4) along the central longitudinal axis (A-A'), and/or a lapping at a lower end (3) along the central longitudinal axis (A-A').

6. An air cooler (1) according to any one of claims 1 to 5, wherein the fins (2) are arranged helically along the air cooler (1).

7. An air cooler (1) according to any one of claims 1 to 6, in which the interior and periphery of the air cooler (1) are devoid of any additional circuit intended for the circulation of a cooling liquid.

8. A device comprising an air cooler (1) according to any of the preceding claims, a balloon (8) and a balloon heater (9).

9. A method of manufacturing an air cooler (1) according to any of claims 1 to 7, comprising the following steps:
i) heating an area of a thermoplastic tube to be deformed,
ii) deforming the heated zone so as to create a fin (2) turned towards the inside of said tube and which extends beyond the central longitudinal axis (A-A'), step ii) being carried out by creating a vacuum in the tube, and
iii) repeat steps i) and ii) until the desired number of fins (2) is obtained.

10. A method according to claim 9, in which step ii) is carried out by sucking through one end of said tube, so as to create the sucked ball fin (2).

11. Use of an air cooler (1) according to any one of claims 1 to 7, or of a device according to claim 8, in which at least one vapour circulating inside the air cooler (1) is cooled by heat exchange with ambient air located outside the air cooler (1).

12. Use according to claim 11, wherein said cooled vapour condenses.

13. Use according to claim 11 or 12, in which the ambient air is:
- atmospheric air, or
- an inert gas, with the air cooler (1) located in a hood.
